# DEMANDE DE BREVET EUROPEEN

(11) **EP 2 386 977 A1**
(43) Date de publication de la demande: **16.11.2011**
(21) Numéro de dépôt: 10305505.9
(22) Date de dépôt: 11.05.2010
(51) Int. Cl.: G06F 21/24, G06F 17/30, H04N 1/44

(54) **Système permettant l'affichage d'un fichier informatique privé sur un écran d'un terminal de télécommunications et procédé correspondant**

(71) Demandeur: Gemalto SA, 92190 Meudon (FR)
(72) Inventeur: Aussel, Jean-Daniel, 78470, St-Rémy-lès-Chevreuses (FR); Beziat, Michel, 75013, Paris (FR); Cudonnec, Christian, 91530, Saint Maurice Montcouronne (FR)

(57) **Abrégé**

L'invention concerne notamment un système permettant l'affichage d'un fichier informatique privé sur un écran 10 d'un terminal de télécommunications 11.

Le système comprend :
- un premier et un deuxième sites Internet ;
- dans le premier site Internet, une première image 12 comportant un lien codé 13 vers une adresse d'un fichier 14 du deuxième site Internet, ledit fichier informatique privé étant stocké sous forme chiffrée dans les métadonnées 16 du fichier 14 dans le deuxième site Internet ;
- un programme P apte à reconnaître le lien codé 13 et à chercher dans les métadonnées 16 du fichier 14 dont l'adresse Internet correspond au lien codé 13 un droit de visualisation du fichier informatique privé par une personne connectée au premier site Internet, le programme P téléchargeant via un protocole distant depuis le terminal de télécommunications le fichier informatique privé du deuxième site Internet si ledit droit de visualisation est vérifié, afin d'afficher le fichier informatique privé sur l'écran.

## Description

Le domaine de l'invention est celui des télécommunications et concerne plus précisément un système et un procédé permettant d'assurer la confidentialité de données publiées sur Internet.

La mondialisation de l'information par Internet est devenue depuis plusieurs années un problème majeur pour qui cherche à préserver sa vie privée. Le nombre de sites Internet proposant à des particuliers d'y publier des documents tels que des photos personnelles, articles ou documents électroniques, de participer à des discussions sur des forums ou blogs, parfois afin d'y rencontrer l'âme soeur (sur des sites de type Meetic™) par exemple, ou de dialoguer sur des réseaux sociaux (tel que Facebook™ par exemple) ne cesse d'augmenter. Les particuliers sont donc de plus en plus incités, par les facilités offertes par de tels sites, à dévoiler une partie de leur vie privée, afin de communiquer avec leurs proches, se faire de nouveaux amis ou partager leurs points de vue sur des sujets divers tels que politique, finance ou religion, etc.

Un nombre important de particuliers a cependant également une certaine réticence pour publier sur Internet des informations qu'elles jugent d'un ordre privé, tel que par exemple des photographies d'elles-mêmes ou de leur famille, de destinations lointaines qu'elles sont allées visiter, de leurs opinions politiques, etc., ces particuliers préférant ne pas dévoiler à tout un chacun certains pans de leur vie. La publication de certaines informations d'ordre personnel sur Internet, tel que par exemple sur des sites sociaux très populaires tels que Facebook™ par exemple, constitue effectivement un risque car des personnes mal intentionnées peuvent facilement en prendre connaissance et s'en servir à l'encontre des personnes qui les ont publiées. Des informations personnelles publiées sur Internet peuvent par exemple également tomber entre les mains d'un futur employeur potentiel qui pourrait décider de ne pas donner un emploi à la personne concernée si cet employeur considère qu'elles ne correspondent pas à l'éthique de son entreprise.

Un nombre important de particuliers préfère donc ne pas accéder à ce type de sites sociaux, afin de ne pas y dévoiler des informations qu'ils jugent trop personnelles ou qui pourraient se retourner d'une manière ou d'une autre contre elles.

Cet état de fait a au moins deux inconvénients majeurs :
i - ces particuliers n'accèdent pas aux sites sociaux alors qu'ils en auraient envie pour communiquer ne serait-ce qu'avec leurs proches qui, eux, n'hésitent pas à y accéder ;
ii - les sites sociaux ne bénéficient pas de nouveaux adhérents du fait de la réticence de ces derniers à dévoiler à tout un chacun des photos ou données qu'elles considèrent comme trop personnelles.

Afin de remédier à cette situation, les sites sociaux, ou de manière plus large tout site Internet permettant à un particulier (ou une entreprise) d'y publier des informations (telles que des photographies, des articles ou des documents, etc.) proposent à leurs adhérents de pouvoir supprimer les informations qu'elles y ont postées. Cette solution n'est cependant que partiellement satisfaisante car des employés du site peuvent copier ces informations avant qu'elles ne soient supprimées par la personne qui en est l'auteur, et les republier ou les exploiter de manière abusive par la suite.

Le contrôle absolu de fichiers informatiques que l'on peut nommer « privés » n'est donc pas assuré pour la personne qui les publie sur Internet. Elle n'en garde pas un contrôle total et ne peut être certaine que seules certaines personnes qu'elle aura expressément autorisées à consulter ces fichiers privés y auront accès et jusqu'à quelle moment ces accès privilégiés seront autorisés.

Le demandeur de la présente a proposé dans la demande EP-09.305445 déposée le 18 mai 2009 une solution à ce problème. Cette solution consiste à chiffrer dans les métadonnées d'une image de type JPG le fichier privé (une image par exemple) que l'on souhaite protéger et ne partager qu'avec certaines personnes. Un mécanisme de chiffrement à base de clé publique est mis en place afin d'assurer que seules les personnes qui auront été expressément autorisées à consulter le fichier privé seront autorisées à le faire. Ceci permet d'assurer une confidentialité de fichiers publiés sur Internet.

Cette solution a cependant certains inconvénients :
i - certains sites Internet, et notamment le site Facebook™, redimensionnent les images et suppriment une partie des métadonnées, ce qui a pour conséquence que le fichier privé chiffré est supprimé. Il n'est donc pas possible d'utiliser cette solution sur de tels sites ;
ii - certains autres sites Internet, et notamment le site Googledoc™ limitent la taille des métadonnées (actuellement à 500 KB), ce qui a pour conséquence qu'il n'est pas possible d'y stocker des fichiers privés chiffrés de taille importante ;
iii - enfin, certains sites Internet interdisent la modification des métadonnées, ce qui a pour conséquence que le répertoire des personnes autorisées à visualiser le fichier privé chiffré ne peut être mis à jour (par ajout ou suppression de personnes autorisées) une fois le fichier posté. Un tel répertoire est présent dans les métadonnées de l'image postée.

La présente invention a notamment pour objectif de pallier à ces inconvénients.

Plus précisément, un des objectifs de l'invention est de fournir notamment un procédé et un système permettant d'assurer à toute personne souhaitant poster un fichier informatique privé sur Internet, et notamment sur un site (réseau) social tel que Facebook™, qu'elle maîtrisera non seulement les droits d'accès pour des tiers à ce fichier informatique privé, mais qu'elle pourra également ajouter ou supprimer ces droits d'accès jusqu'à pouvoir les supprimer pour tout le monde, ce qui aura pour conséquence que le fichier sera devenu tout simplement inaccessible pour tous. Ceci correspond en pratique à une disparition du fichier informatique privé et de garantir que la personne qui stocke un tel fichier informatique privé sur Internet en garde un contrôle total quant à sa mise à disposition à des tiers.

Un autre objectif de l'invention est de permettre la publication de fichiers informatiques privés sur un site tel que Facebook™, malgré le redimensionnement des images et la suppression des métadonnées par ce site.

Un autre objectif de l'invention est de permettre la publication de fichiers informatiques privés sur des sites limitant la taille des métadonnées.

Ces objectifs, ainsi que d'autres qui apparaîtront par la suite, sont atteints grâce à un système permettant l'affichage d'un fichier informatique privé sur un écran d'un terminal de télécommunications, le système comprenant :
- un premier et un deuxième sites Internet ;
- dans le premier site Internet, une première image comportant un lien codé vers une adresse d'un fichier du deuxième site Internet, le fichier informatique privé étant stocké sous forme chiffrée dans les métadonnées du fichier dans le deuxième site Internet ;
- un programme apte à reconnaître le lien codé et à chercher dans les métadonnées du fichier dont l'adresse Internet correspond au lien codé un droit de visualisation du fichier informatique privé par une personne connectée au premier site Internet, le programme téléchargeant via un protocole distant depuis le terminal de télécommunications le fichier informatique privé du deuxième site Internet, si le droit de visualisation est vérifié, afin d'afficher le fichier informatique privé sur l'écran.

Le lien codé est avantageusement un code QR.

Le fichier informatique privé est de préférence une image et le terminal de télécommunications un ordinateur ou un téléphone mobile.

Le protocole distant est avantageusement choisi parmi l'un des protocoles suivants :
- http,
- https, ou
- ftp.

De préférence, le programme est une extension d'un navigateur web.

La première image comporte avantageusement, en plus du lien codé, l'image d'un cadenas.

Le fichier est préférentiellement une image comportant dans sa partie données l'image d'un cadenas.

Le programme selon l'invention vérifie de préférence :
- si un identifiant numérique de la personne existe dans les métadonnées du fichier, le identifiant numérique étant choisi parmi :
- une adresse e-mail de la personne,
- le nom de la personne sur une plateforme de réseau social,
et, si l'identifiant numérique existe, le programme déchiffre le fichier informatique privé à la volée afin de l'afficher sur l'écran, le programme utilisant pour ce déchiffrement un secret possédé par la personne dont l'identité numérique est comprise dans les métadonnées du fichier du deuxième site Internet.

L'invention concerne également un site Internet, appelé premier site Internet, stockant une première image comportant un lien codé vers une adresse d'un fichier d'un deuxième site Internet où est stocké un fichier informatique privé.

Le site Internet est de préférence constitué par un réseau social.

L'invention concerne également un site Internet, appelé deuxième site Internet, ce site stockant un fichier comportant dans ses métadonnées un fichier informatique privé chiffré ainsi qu'un répertoire de chiffrés d'une clé ayant servi à chiffrer le fichier informatique privé, la clé ayant été chiffrée par des clés publiques de personnes autorisées à visualiser le fichier informatique privé sous une forme déchiffrée.

De préférence, chacun des chiffrés de clés est associé à un identifiant numérique d'une personne à qui un droit d'accès au fichier informatique privé chiffré est accordé.

L'invention concerne également un procédé d'affichage d'un fichier informatique privé sur un écran d'un terminal de télécommunications, le terminal étant connecté à un premier site Internet, le procédé consistant à :
- afficher sur le premier site Internet une première image comportant un lien codé vers une adresse d'un fichier d'un deuxième site Internet, le fichier informatique privé étant stocké sous forme chiffrée dans les métadonnées du fichier dans le deuxième site Internet ;
- reconnaître, à l'aide d'un programme, le lien codé et chercher dans les métadonnées du fichier dont l'adresse Internet correspond au lien codé un droit de visualisation du fichier informatique privé par une personne connectée au premier site Internet,
- télécharger via un protocole distant depuis le terminal de télécommunications le fichier informatique privé si le droit de visualisation est vérifié, afin d'afficher le fichier informatique privé sur l'écran.

L'invention concerne également un programme informatique destiné à l'affichage d'un fichier informatique privé sur un écran d'un terminal de télécommunications, le programme comprenant des moyens pour :
- chiffrer, à l'aide d'une clé, le fichier informatique privé, afin d'obtenir un fichier informatique privé chiffré ;
- stocker le fichier informatique privé chiffré dans les métadonnées d'un fichier sur un site Internet, appelé deuxième site Internet ;
- générer au moins un chiffré de la clé à l'aide d'une clé publique d'une personne autorisée à visualiser le fichier informatique privé ;
- stocker le chiffré de la clé dans les métadonnées du fichier du deuxième site Internet ;
- générer un lien codé de l'adresse du fichier du deuxième site Internet ;
- inclure le lien codé dans une image, appelée première image, stockée dans un autre site Internet, appelé premier site Internet ;
- lors d'un affichage de la première image sur l'écran, reconnaître le lien codé et chercher dans les métadonnées du fichier dont l'adresse Internet correspond au lien codé, un droit de visualisation du fichier informatique privé par une personne connectée au premier site Internet ;
- télécharger via un protocole distant, depuis le terminal, le fichier informatique privé du fichier du deuxième site Internet, si le droit de visualisation est vérifié, afin d'afficher le fichier informatique privé sur l'écran.

L'invention concerne également un lien codé correspondant à une adresse d'un fichier stocké sur un site Internet, appelé second site Internet, le fichier comprenant, dans ses métadonnées, un fichier informatique privé chiffré et au moins un chiffré obtenu à l'aide d'une clé publique d'une personne autorisée à visualiser le fichier informatique privé.

Le lien est avantageusement compris dans une image stockée sur un premier site Internet.

De préférence, le lien est caché par stéganographie.

Il est également possible d'imprimer le lien sur un document, ce document pouvant être un catalogue papier.

D'autres caractéristiques et avantages de la présente invention apparaîtront plus clairement à la lecture de la description suivante d'un mode de mise en oeuvre préférentiel, donné à titre illustratif et non limitatif, et des dessins annexés dans lesquels :
- la figure 1 représente un système selon la présente invention ;
- la figure 2 représente le procédé mis en oeuvre dans un système selon la figure 1 ;
- la figure 3 représente les différentes étapes mises en oeuvre par un programme permettant de charger un ou plusieurs fichiers sur des sites Internet ;
- la figure 4 représente un fichier comportant dans ses métadonnées un fichier informatique privé chiffré ainsi qu'un répertoire de chiffrés en correspondance avec des identifiants de personnes à qui un droit de consultation du fichier informatique privé est accordé ;
- la figure 5 représente une capture d'écran d'un terminal de télécommunications connecté à un premier site Internet tel qu'il se présente en l'absence de l'exécution du programme selon la présente invention ;
- la figure 6 représente une capture d'écran d'un terminal de télécommunications connecté à un premier site Internet tel qu'il se présente en utilisant le programme selon la présente invention.

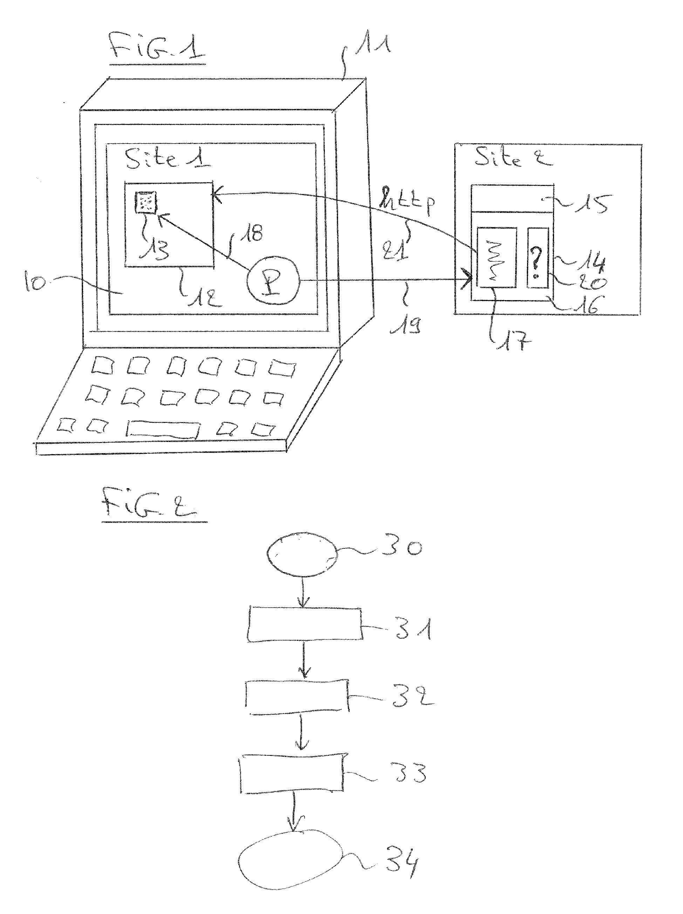

La figure 1 représente un système selon la présente invention.

Le système de la figure 1 est destiné à permettre l'affichage d'un fichier informatique privé sur un écran 10 d'un terminal de télécommunications 11, ici constitué par un ordinateur.

Le système comprend deux sites Internet, un premier site, nommé Site 1, et un deuxième site nommé Site 2. L'utilisateur du terminal 11 est connecté au Site 1 et l'écran 10 affiche donc une page de Site 1. Cette page comporte une image 12, appelée première image. La première image comporte dans sa partie données (par opposition à métadonnées), et donc de manière visible, un lien codé 13 correspondant à une adresse d'un fichier distant 14, enregistré sur le deuxième site Internet Site 2. Le lien codé 13 est donc un lien graphique. Le fichier distant 14 comporte une partie données 15 et une partie métadonnées 16. La partie données 15 peut être vide, c'est-à-dire ne comporter aucune donnée. La partie métadonnées 16 comprend le fichier informatique privé sous une forme chiffrée. Le fichier informatique privé chiffré est référencé 17.

Le système comporte également un programme P, stocké au niveau du terminal 11, apte à lire et à reconnaître (flèche 18) le lien codé 13 dans la partie données de l'image 12. Une analyse de l'image est donc réalisée par le programme P. Une fois le lien décodé, le programme P connaît l'adresse du fichier 14 et cherche (flèche 19) dans les métadonnées 16 du fichier 14 un droit de visualisation du fichier informatique privé par la personne connectée au Site 1. Ces droits sont enregistrés dans un répertoire référencé 20.

Si le droit de visualisation est vérifié, le programme P télécharge via un protocole distant (par exemple le protocole http - flèche 21) depuis le terminal 11 le fichier informatique privé et le déchiffre à la volée afin qu'il s'affiche en clair à la place de l'image 12. L'utilisateur dont les droits d'accès au fichier ont été vérifiés a de ce fait la possibilité de voir le fichier informatique privé sur l'écran 10.

Le lien codé 13 doit être robuste au redimensionnement afin d'éviter des pertes d'information si le Site 1 pratique un redimensionnement, ce qui est le cas pour Facebook™.

Le lien codé 13 est, dans un mode de réalisation préférentiel, constitué par un code QR. Les codes QR ont la particularité d'être peu sensibles au redimensionnement car ils sont obtenus à partir d'un algorithme qui crée des redondances dans le code QR. De ce fait, les codes QR supportent une certaine perte d'information. Il est également possible d'utiliser un code barre (1 seule dimension, contrairement à 2 dimensions pour un code QR).

Dans un autre mode de réalisation, le lien codé 13 est le lien en clair de l'adresse du fichier 14, par exemple http://www.flickr.com/photos/12345678. Le programme P comprend alors un logiciel de reconnaissance de caractères pour récupérer l'adresse du fichier 14.

Le fichier informatique privé 14 est, dans un mode de mise en oeuvre particulier, une image, par exemple en format JPG. Il est cependant tout à fait possible de prévoir un fichier 14 sous la forme d'un .doc, .xls ou .ppt par exemple.

Le terminal de télécommunications 11 n'est pas nécessairement un ordinateur : il peut s'agir d'un terminal mobile (téléphone) comprenant le programme P et capable de se connecter à Internet.

Le protocole distant http peut également être remplacé par un protocole https, ou ftp.

Dans un mode de réalisation avantageux, le programme P est une extension d'un navigateur web, c'est-à-dire un plug-in téléchargeable par n'importe quel internaute souhaitant soit poster des fichiers tel que 14, soit pouvoir les lire (à condition que des droits de lecture lui aient été octroyés). Ceci sera détaillé par la suite.

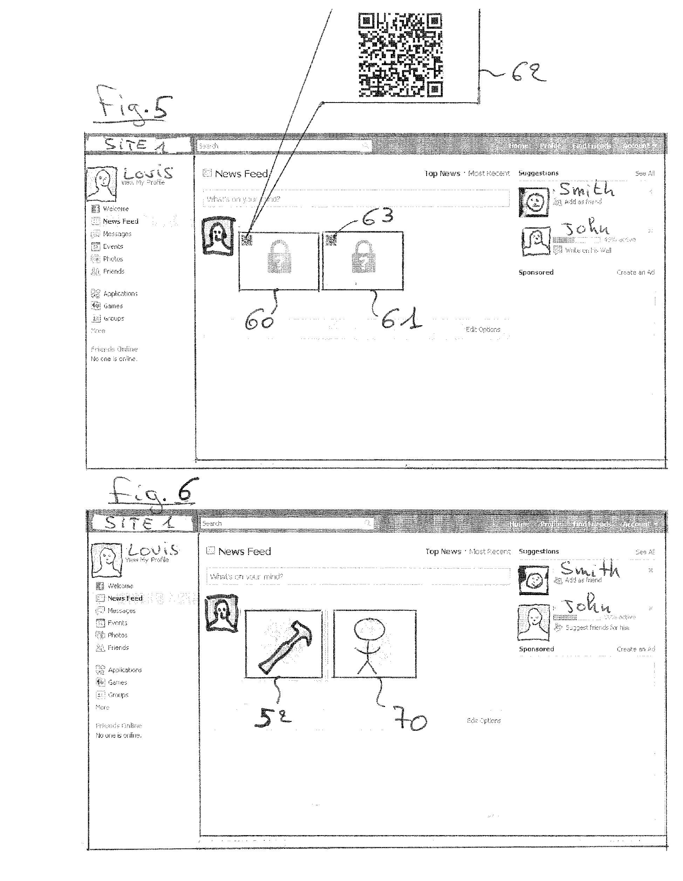

La première image 12 peut comporter, en plus du lien codé 13, une autre image (dans sa partie données) montrant que celle-ci est protégée en lecture. Il peut par exemple s'agir d'un cadenas symbolisant le fait que l'accès est restreint, comme il sera décrit en référence à la figure 5.

Une des fonctions du programme P est donc de vérifier dans les métadonnées du fichier 14 si un identifiant numérique de la personne qui souhaite y accéder existe. Cet identifiant est par exemple une adresse e-mail de cette personne ou le nom de cette personne sur une plateforme de réseau social, tel que Facebook™. Si l'identifiant numérique existe, le programme P déchiffre le fichier informatique privé à la volée afin de l'afficher sur l'écran 10. Le programme P utilise pour ce déchiffrement un secret possédé par la personne dont l'identité numérique est comprise dans les métadonnées du fichier 14.

La figure 2 représente le procédé mis en oeuvre dans un système selon la figure 1.

Le procédé comporte trois étapes principales :
Après une étape de début 30 pendant laquelle une personne souhaitant visualiser un ou plusieurs fichiers informatiques privés accède à une page d'un premier site Internet Site 1, le procédé consiste à :
   - afficher (étape 31) sur ce premier site Internet une première image comportant un lien codé vers une adresse d'un fichier d'un deuxième site Internet, le fichier informatique privé étant stocké sous forme chiffrée dans les métadonnées du deuxième fichier ;
   - reconnaître (étape 32), à l'aide du programme P, le lien codé et chercher dans les métadonnées du deuxième fichier dont l'adresse Internet correspond au lien codé un droit de visualisation du fichier informatique,
   - télécharger (étape 33) via un protocole distant depuis le terminal de télécommunications le fichier informatique privé si le droit de visualisation a été accordé à cette personne, afin d'afficher le fichier informatique privé sur l'écran.

Le procédé se termine par une étape de fin 34.

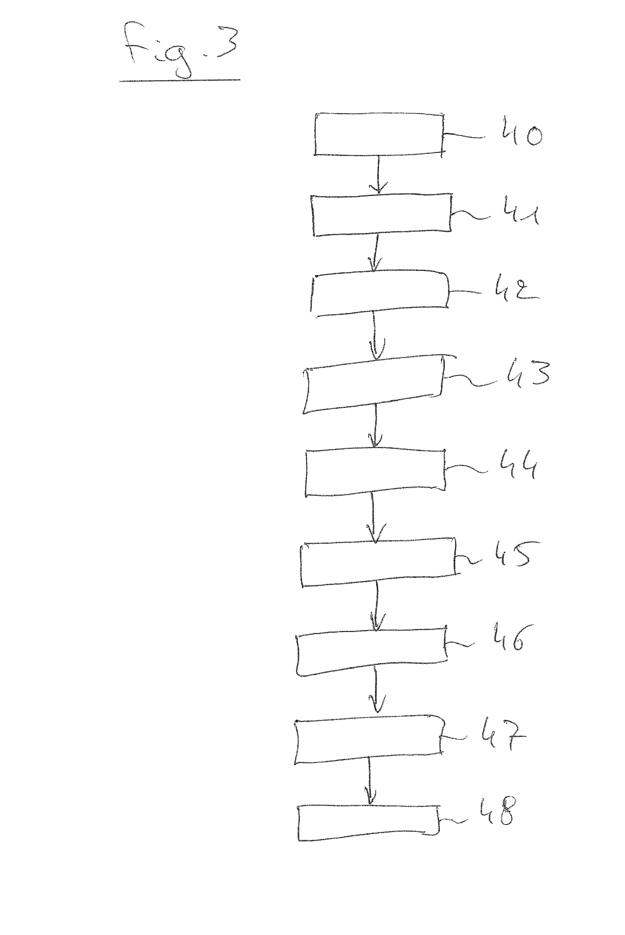

La figure 3 représente les différentes étapes mises en oeuvre par un programme permettant de charger un ou plusieurs fichiers sur des sites Internet.

Le programme P, avantageusement comme déjà indiqué constitué par un plug-in, assure de nombreuses fonctions, tant pour le stockage des images sur le premier site et des fichiers (qui peuvent être des images) sur le deuxième site, que pour la lecture de ces fichiers.

On se mettra dans le cadre de la description suivante dans le cadre d'une photo à publier à un nombre restreint de personnes.

Pour stocker une photo sur le deuxième site Internet, le programme P demande (étape 40) à l'utilisateur de sélectionner sur son disque dur ou à partir d'un dongle externe une photo qu'il souhaite partager avec des amis. Cette sélection effectuée, le programme P cherche (étape 41) les amis de l'utilisateur qui sont enregistrés sur des sites Internet tels que Facebook™ et Flickr™ et qui disposent de clés publiques, notées Pubi. Cette liste d'amis lui est alors présentée (étape 42).

Les clés publiques sont disponibles sur les sites précités ou disponibles sur des serveurs de clés distants. Seuls les amis de l'utilisateur ayant des clés publiques pourront visualiser la photo sélectionnée par l'utilisateur, comme il sera vu par la suite.

Si l'utilisateur souhaite partager sa photo avec des amis qui n'ont pas de clés publiques, il doit les contacter pour que ces derniers installent le programme P sur leurs terminaux (ordinateurs ou terminaux mobiles), le programme P générant sur chaque terminal une clé privée qui reste dans le terminal et une clé publique qui est soit stockée dans les sites précités, soit stockée sur un serveur distant mais accessible pour tout le monde.

L'utilisateur sélectionne ensuite (étape 43) dans la liste d'amis qui lui est présentée ceux pour lesquels il souhaite que sa photo puisse être mise à disposition.

Le programme génère alors (étape 44) une clé de session K et chiffre (étape 45) K par les clés publiques de ses amis sélectionnés. Ce chiffrement est par exemple obtenu par RSA.

Ainsi, pour plusieurs amis A, B et C autorisés à visualiser la photo sélectionnée, les chiffrés de clé seront générés :

(K)PubA, (K) PubB et (K)PubC

correspondant respectivement à la clé de session K chiffrée par les clés publiques des amis A, B et C.

Le programme P chiffre (crypte) également la photo sélectionnée à l'aide de la clé K (étape 46).

De manière facultative, le programme P génère également une image du cadenas qui peut être insérée dans la partie données de la première image (celle visible sur le premier site), à côté du lien codé.

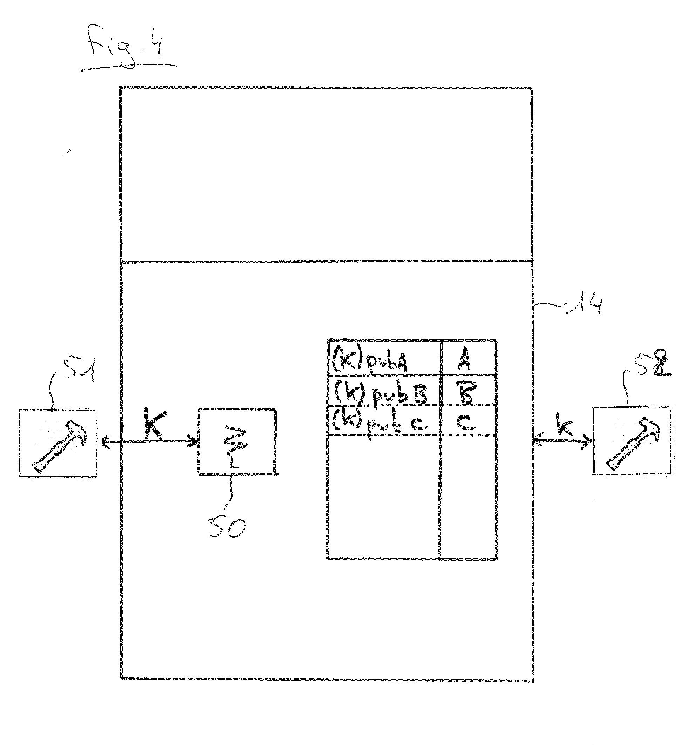

Le programme P stocke (étape 47) dans le deuxième site Internet la photo chiffrée par la clé de session K ainsi que les chiffrés de clé (K)PubA, (K) PubB et (K)PubC. Ces chiffrés de clés sont de préférence stockés dans un répertoire comme il sera décrit en référence à la figure 4. Ces stockages dans le deuxième site sont effectués dans les métadonnées d'une image ou plus généralement d'un fichier.

Le programme P génère ensuite (étape 48) le lien codé (QR code) de l'adresse Internet de ce fichier ou de cette image et insère le lien codé, avec éventuellement l'image du cadenas, dans la partie données d'une image sur le premier site Internet.

A ce moment là, les différents éléments sont en place : sur le premier site apparaît une image comportant le lien codé et le deuxième site comprend un fichier comprenant dans ses métadonnées l'image chiffrée par K ainsi que les chiffrés de la clé K par les clés publiques des amis.

Dans le cas de plusieurs photos sélectionnées par l'utilisateur, chaque photo est de préférence chiffrée par une clé différente.

La figure 4 représente un tel fichier 14.

La partie données du fichier 14 (partie supérieure) est vide ou renferme éventuellement également une représentation d'un cadenas. La partie métadonnées (partie inférieure) renferme une photo chiffrée 50 (ici une image d'un marteau a été chiffrée par la clé de session K), la photo en clair sélectionnée par l'utilisateur étant référencée 51. La partie métadonnées renferme également les chiffrés de la clé K par les clés publiques des amis. En correspondance de chaque chiffré, on stocke également de préférence un identifiant numérique (A, B et C) de la personne correspondante. Cet identifiant est par exemple l'adresse Internet de cette personne ou alors un pseudonyme qu'elle utilise sur un réseau social. Le déchiffrage de la photo chiffrée 50 est réalisé en utilisant la clé K pour obtenir l'image en clair 52 identique à l'image 51.

Selon une première méthode, le programme P essaie de déchiffrer le fichier informatique privé avec la clé privée de l'utilisateur, c'est-à-dire qu'il essaie de récupérer K en appliquant la clé privée de l'utilisateur à chaque entrée présente dans le répertoire. Chaque valeur de K déchiffrée est appliquée au fichier informatique privé jusqu'à ce qu'un fichier informatique privé déchiffré soit reconnu.

Selon une méthode plus rapide, surtout lorsque le nombre de personnes autorisées à visualiser le fichier informatique privé est important, le programme P vérifie si l'identité de la personne cherchant à visualiser le fichier informatique privé est présente dans le répertoire. A chaque identité i est associée une clé de session K chiffrée par la clé publique de la personne ayant l'identité i. Cette identité est par exemple l'adresse e-mail de cette personne. Si elle y figure, le plug-in récupère la valeur (K)Pubi correspondante, récupère K à l'aide de la clé privée de cette personne et déchiffre à la volée le fichier informatique privé. Le fichier informatique privé remplace dans le premier site Internet l'image visible (dans la partie données) du document visualisé par l'utilisateur autorisé. L'utilisateur peut ainsi visualiser le fichier informatique privé. Si au contraire l'identité de la personne ne figure pas dans le répertoire, le plug-in n'essaie pas de déchiffrer le fichier informatique privé et affiche l'image comprise dans la partie data de l'image (par exemple un cadenas).

Le fichier informatique privé peut être une image BMP ou JPEG, un document DOC ou XLS ou tout autre type de document. Il n'y a pas de limitation à cet égard.

Le chiffrement du fichier informatique privé est réalisé par une clé de session K générée de manière pseudo-aléatoire. Cette clé de session K est une clé symétrique (AES ou DES).

La figure 5 représente une capture d'écran d'un terminal de télécommunications connecté au premier site Internet Site 1 tel qu'il se présente en l'absence de l'exécution du programme selon la présente invention.

Deux images 60 et 61 sont affichées sur la page Internet du Site 1. Chacune de ces images comporte, dans sa partie données, l'image d'un cadenas. Ce cadenas symbolise le fait que l'image est chiffrée et que seuls des utilisateurs agrées par la personne qui l'a publiée pourront la visualiser en clair. L'affichage du cadenas est cependant facultatif. Les images 60 et 61 comportent également dans leurs parties données des liens codés 62 et 63 constitués ici par des codes QR.

Un tel écran se présente à l'internaute lorsqu'il accède à cette page s'il ne dispose pas du programme P selon l'invention ou avant l'exécution du programme P. Lorsque le programme P est constitué par une extension (plug-in) du navigateur Internet, cette extension s'exécute automatiquement et, après quelques secondes, l'écran qui s'affiche à l'écran est tel que celui représenté à la figure 6.

La figure 6 représente une capture d'écran d'un terminal de télécommunications connecté au premier site Internet tel qu'il se présente en utilisant le programme selon la présente invention.

Le programme P est allé chercher sur le Site 2, grâce aux adresses comprises dans les liens codés 62 et 63, les photos chiffrées du marteau 52 et d'une personne 70, les a déchiffrées puis affichées sur l'écran.

L'invention concerne également un programme informatique destiné à l'affichage d'un fichier informatique privé sur un écran d'un terminal de télécommunications, ce programme comprenant des moyens pour :
- chiffrer, à l'aide d'une clé, le fichier informatique privé, afin d'obtenir un fichier informatique privé chiffré ;
- stocker le fichier informatique privé chiffré dans les métadonnées d'un fichier sur un deuxième site Internet ;
- générer au moins un chiffré de la clé à l'aide d'une clé publique d'une personne autorisée à visualiser le fichier privé ;
- stocker le chiffré de la clé dans les métadonnées du fichier du deuxième site Internet ;
- générer un lien codé de l'adresse du fichier du deuxième site Internet ;
- inclure le lien codé dans une première image stockée dans un premier site Internet ;
- lors d'un affichage de la première image sur l'écran, reconnaître le lien codé et chercher dans les métadonnées du fichier dont l'adresse Internet correspond au lien codé, un droit de visualisation du fichier privé par une personne connectée au premier site Internet ;
- télécharger via un protocole distant, depuis le terminal, le fichier informatique privé du fichier du deuxième site Internet, si le droit de visualisation est vérifié, afin d'afficher le fichier privé sur l'écran.

L'invention s'applique également dans le cadre suivant : une première personne tente de visualiser un fichier informatique privé sur l'écran de son ordinateur. Or, elle ne dispose pas des droits qui auraient pu lui être alloués par la personne qui a posté le fichier informatique privé sur le premier site Internet. Elle ne peut donc que voir le code QR sur le premier site Internet. Une deuxième personne, ayant téléchargé le programme dans son téléphone portable et à laquelle des droits ont été alloués, peut lui venir en aide : cette deuxième personne prend une photo de l'écran de l'ordinateur, le programme accède au deuxième site Internet, reconnaît que le deuxième utilisateur a le droit de visualiser le fichier informatique privé et l'affiche sur l'écran du téléphone portable.

L'invention concerne également un lien codé correspondant à une adresse d'un fichier stocké sur un site Internet, appelé second site Internet, le fichier comprenant, dans ses métadonnées, un fichier informatique privé chiffré et au moins un chiffré obtenu à l'aide d'une clé publique d'une personne autorisée à visualiser le fichier informatique privé.

Comme décrit précédemment, ce lien est par exemple compris dans une image stockée sur un (premier) site Internet.

Le lien codé n'est pas nécessairement visible : il peut être caché par stéganographie. Ceci permet d'afficher une image publique sur le premier site Internet pour les personnes n'ayant pas le droit de visualiser le fichier privé, alors que les personnes à qui un droit de visualisation a été accordé verront le fichier privé. Ceci est particulièrement intéressant lorsque le fichier privé est constitué par une image : dans le premier cas une image cachant le lien s'affiche à l'écran, dans le deuxième cas, une autre image remplace la première. Un utilisateur ayant des droits de consultation de l'image privée verra donc une autre image que celle visible par une personne à qui un droit de visualisation n'aura pas été accordé.

Dans un mode de réalisation préférentiel, le lien peut être imprimé sur un document, tel qu'un document papier par exemple (un catalogue). Ce cas de figure correspond par exemple à une publicité réservée aux abonnés du catalogue. Chaque abonné dispose d'un droit d'accès au fichier informatique privé, par exemple pour bénéficier d'une offre promotionnelle, alors que les personnes n'ayant pas été autorisées à accéder au fichier (grâce à leur adresse publique) ne pourront pas bénéficier de l'offre.

Dans une autre application, par exemple dans le domaine de l'édition d'articles, il est possible d'autoriser des abonnés à accéder à certains articles de journal : l'éditeur (par exemple Le Monde™) ou un éditeur de conseils boursiers, décide de donner accès à ses abonnés à certains articles. Il leur confère le droit d'accéder à ces articles en enregistrant leurs clés publiques dans le système, ce qui lui garantit que seuls ses abonnés auront un accès direct à ces articles.

Il est également possible de faire payer l'accès au programme selon l'invention et de décrémenter un compteur interne au programme au fur et à mesure que l'utilisateur visionne les articles. Lorsque le compteur arrive à zéro, les droits d'accès sont épuisés et il ne peut plus accéder aux articles proposés par l'éditeur.

L'ajout ou la suppression d'utilisateurs autorisés à voir le fichier privé est géré par la personne qui a posté le fichier privé. Tout ajout ou suppression de droits passe par une génération d'une nouvelle clé de session. La suppression de tous les droits a pour conséquence que le fichier chiffré sera certes stocké sur le deuxième site mais plus personne ne pourra le consulter, ni à partir du premier site (aucun droit d'accès n'est conféré), ni à partir du deuxième (d'une part le fichier est chiffré et d'autre part il figure dans les métadonnées et n'est donc pas visible).

Dans un mode de mise en oeuvre avantageux, un utilisateur stockera ses fichiers (images) privées sous forme chiffrée sur Googledoc™, Picasa™ ou Flickr™, alors que les images publiques seront stockées sur Facebook™.

L'invention telle que décrite ci-dessus l'a été en référence aux dessins annexés et l'homme du métier imaginera aisément d'autres modes de mise en oeuvre sans pour autant sortir du cadre des revendications.

## Revendications

1. Système permettant l'affichage d'un fichier informatique privé (52, 70) sur un écran (10) d'un terminal de télécommunications (11), ledit système comprenant :
- un premier (Site 1) et un deuxième (Site 2) sites Internet ;
- dans ledit premier site Internet (Site 1), une première image (12, 60, 61) comportant un lien codé (13, 62, 63) vers une adresse d'un fichier (14) dudit deuxième site Internet (Site 2), ledit fichier informatique privé (52, 70) étant stocké sous forme chiffrée dans les métadonnées (16) dudit fichier (14) dans ledit deuxième site Internet (Site 2) ;
- un programme (P) apte à reconnaître ledit lien codé (13, 62, 63) et à chercher dans les métadonnées (16) dudit fichier (14) dont l'adresse Internet correspond audit lien codé (13, 62, 63) un droit de visualisation dudit fichier informatique privé (52, 70) par une personne connectée audit premier site Internet (Site 1), ledit programme (P) téléchargeant via un protocole distant depuis ledit terminal de télécommunications (11) ledit fichier informatique privé (52, 70) dudit deuxième site Internet (Site 2), si ledit droit de visualisation est vérifié, afin d'afficher ledit fichier informatique privé (52, 70) sur ledit écran (10).

2. Système selon la revendication 1, **caractérisé en ce que** ledit lien codé (13, 62, 63) est un code QR.

3. Système selon l'une des revendications 1 et 2, **caractérisé en ce que** ledit fichier informatique privé (52, 70) est une image.

4. Système selon l'une des revendications 1 à 3, **caractérisé en ce que** ledit terminal de télécommunications est un ordinateur (11).

5. Système selon l'une des revendications 1 à 3, **caractérisé en ce que** ledit terminal de télécommunications (11) est un téléphone mobile.

6. Système selon l'une des revendications 1 à 5, **caractérisé en ce que** ledit protocole distant est choisi parmi l'un des protocoles suivants :
- http,
- https, ou
- ftp.

7. Système selon l'une des revendications 1 à 6, **caractérisé en ce que** ledit programme (P) est une extension d'un navigateur web.

8. Système selon l'une des revendications 1 à 7, **caractérisé en ce que** ladite première image (12, 60, 61) comporte, en plus dudit lien codé (13, 62, 63), l'image d'un cadenas.

9. Système selon l'une des revendications 1 à 8, **caractérisé en ce que** ledit fichier (14) est une image comportant dans sa partie données (15) l'image d'un cadenas.

10. Système selon l'une des revendications 1 à 9, **caractérisé en ce que** ledit programme (P) vérifie :
- si un identifiant numérique (A, B, C) de ladite personne existe dans les métadonnées (16) dudit fichier (14), ledit identifiant numérique (A, B, C) étant choisi parmi :
- une adresse e-mail de ladite personne,
- le nom de ladite personne sur une plateforme de réseau social,
et **en ce que**, si ledit identifiant numérique (A, B, C) existe, ledit programme (P) déchiffre ledit fichier informatique privé (52, 70) à la volée afin de l'afficher sur ledit écran (10), ledit programme (P) utilisant pour ce déchiffrement un secret (PubA, PubB, PubC) possédé par la personne dont l'identité numérique (A, B, C) est comprise dans les métadonnées (16) dudit fichier (14) dudit deuxième site Internet (Site 2).

11. Site Internet, appelé premier site Internet (Site 1), stockant une première image (12) comportant un lien codé (13) vers une adresse d'un fichier (14) d'un deuxième site Internet (Site 2) où est stocké un fichier informatique privé.

12. Site Internet selon la revendication 11, **caractérisé en ce qu'**il est constitué par un réseau social.

13. Site Internet, appelé deuxième site Internet (Site 2), **caractérisé en ce qu'**il stocke un fichier (14) comportant dans ses métadonnées (16) un fichier informatique privé chiffré (17) ainsi qu'un répertoire (20) de chiffrés d'une clé (K) ayant servi à chiffrer ledit fichier informatique privé (52, 70), ladite clé (K) ayant été chiffrée par des clés publiques (PubA, PubB, PubC) de personnes autorisées à visualiser ledit fichier informatique privé (52, 70) sous une forme déchiffrée.

14. Site Internet selon la revendication 13, **caractérisé en ce que** chacun desdits chiffrés de clés est associé à un identifiant numérique (A, B, C) d'une personne à qui un droit d'accès audit fichier informatique privé chiffré (17) est accordé.

15. Procédé d'affichage d'un fichier informatique privé (52, 70) sur un écran (10) d'un terminal de télécommunications (11), ledit terminal (11) étant connecté à un premier site Internet (Site 1), **caractérisé en ce qu'**il consiste à :
- afficher (31) sur ledit premier site Internet (Site 1) une première image (12, 60, 61) comportant un lien codé (13, 62, 63) vers une adresse d'un fichier (14) d'un deuxième site Internet (Site 2), ledit fichier informatique privé (52, 70) étant stocké sous forme chiffrée dans les métadonnées (16) dudit fichier (14) dans ledit deuxième site Internet (Site 2) ;
- reconnaître (32), à l'aide d'un programme (P), ledit lien codé (13, 62, 63) et chercher dans les métadonnées (16) dudit fichier (14) dont l'adresse Internet correspond audit lien codé (13, 62, 63) un droit de visualisation dudit fichier informatique privé (52, 70) par une personne connectée audit premier site Internet (Site 1),
- télécharger (33) via un protocole distant depuis ledit terminal de télécommunications (11) ledit fichier informatique privé (52, 70) si ledit droit de visualisation est vérifié, afin d'afficher ledit fichier informatique privé (52, 70) sur ledit écran (10).

16. Programme informatique (P) destiné à l'affichage d'un fichier informatique privé (52, 70) sur un écran (10) d'un terminal de télécommunications (11), ledit programme (P) comprenant des moyens pour :
- chiffrer, à l'aide d'une clé (K), ledit fichier informatique privé (52, 70), afin d'obtenir un fichier informatique privé chiffré (17) ;
- stocker ledit fichier informatique privé chiffré (17) dans les métadonnées (16) d'un fichier sur un site Internet, appelé deuxième site Internet (Site 2) ;
- générer au moins un chiffré de ladite clé (K) à l'aide d'une clé publique (PubA, PubB, PubC) d'une personne autorisée à visualiser ledit fichier informatique privé (52, 70) ;
- stocker ledit chiffré de ladite clé (K) dans les métadonnées (16) dudit fichier (14) dudit deuxième site Internet (Site 2) ;
- générer un lien codé (13, 62, 63) de l'adresse dudit fichier (14) dudit deuxième site Internet ;
- inclure ledit lien codé (13, 62, 63) dans une image (12), appelée première image, stockée dans un autre site Internet, appelé premier site Internet (Site 1) ;
- lors d'un affichage de ladite première image (12) sur ledit écran (10), reconnaître ledit lien codé (13, 62, 63) et chercher dans les métadonnées (16) dudit fichier (14) dont l'adresse Internet correspond audit lien codé (13, 62, 63), un droit de visualisation dudit fichier informatique privé (52, 70) par une personne connectée audit premier site Internet (Site 1) ;
- télécharger via un protocole distant, depuis ledit terminal (11), ledit fichier informatique privé (52, 70) dudit deuxième site Internet (Site 2), si ledit droit de visualisation est vérifié, afin d'afficher ledit fichier informatique privé (52, 70) sur ledit écran (10).

17. Lien codé (13, 62, 63) correspondant à une adresse d'un fichier (14) stocké sur un site Internet, appelé second site Internet (Site 2), ledit fichier (14) comprenant, dans ses métadonnées (16), un fichier informatique privé chiffré (17) et au moins un chiffré obtenu à l'aide d'une clé publique (PubA, PubB, PubC) d'une personne autorisée à visualiser ledit fichier informatique privé (52, 70).

18. Lien (13, 62, 63) selon la revendication 17, **caractérisé en ce qu'**il est compris dans une image (12, 60, 61) stockée sur un premier site Internet (Site 1).

19. Lien (13, 62, 63) selon l'une des revendications 17 et 18, **caractérisé en ce qu'**il est caché par stéganographie.

20. Lien (13, 62, 63) selon la revendication 17, **caractérisé en ce qu'**il est imprimé sur un document.

21. Document selon la revendication 20, **caractérisé en ce qu'**il est constitué par un catalogue papier.
